# DEMANDE DE BREVET EUROPEEN

(11) **EP 1 916 825 A1**
(43) Date de publication de la demande: **30.04.2008**
(21) Numéro de dépôt: 07117931.1
(22) Date de dépôt: 05.10.2007
(51) Int. Cl.: H04L 29/12

(54) **Traversée d'un équipement de traduction d'adresse NAT pour messages de signalisation conformes au protocole SIP par redondance d'informations d'adresses**

(30) Priorité: 26.10.2006 FR 0654544
(71) Demandeur: Alcatel Lucent, 75008 Paris (FR)
(72) Inventeur: Hiribarren, Vincent, 91310, LINAS (FR); Levy, Thomas, 75015, PARIS (FR)
(74) Mandataire: Chaffraix, Sylvain

(57) **Abrégé**

Procédé d'établissement d'une session de communication (fm) entre un client de communication appelant (C₁) et un client de communication appelé (C₂), au travers d'un réseau de communication (SN₁, SN, SN₂) comportant au moins un équipement de traduction d'adresses (NAT₁, NAT₂). Il comporte des étapes de transmissions de messages de signalisation (fs), transitant par le ou les équipements de traduction d'adresses et permettant l'échange des adresses physiques des clients de communication pour l'établissement de la session de communication. Ce procédé se caractérise en ce qu'au moins un client transmet au moins un message de signalisation contenant une adresse physique dans un premier emplacement et, dans un second emplacement distinct, une information codée contenant cette même adresse physique.

## Description

La présente invention est relative aux réseaux de communication. Elle concerne plus précisément le problème de la transmission de messages de signalisation au travers d'équipements de traductions d'adresses tels des « NAT ».

Les réseaux de communication actuels permettant l'établissement de session de communication au moyen de protocoles de signalisation tels H.323, MGCP (*Media Gateway Control Protocol*) ou SIP (*Session Initiation Protocol*) et SDP (*Session Description Protocol*).

Ce protocole SIP est défini par le RFC 3261 de l'IETF (*Internet Engineering Task Force*) et il a pour double but de permettre :
- la mise en relation entre deux parties,
- la négociation des caractéristiques de la session à établir (débit vidéo, encodeur (CODEC) à utiliser, etc.), via le protocole SDP.

Une partie appelante souhaitant appeler une autre partie peut adresser un message de signalisation (« Invite ») à un élément de signalisation, dit « Proxy », contenant son adresse personnelle, l'adresse physique de son terminal (ou, plus généralement, un client) et l'adresse personnelle de la partie appelée. L'élément de signalisation dispose des moyens (« registrar ») pour mettre en correspondance l'adresse personnelle de la partie appelée et l'adresse physique du terminal correspondant. Grâce à cette mise en correspondance, le message de signalisation peut être acheminé à la partie appelante.

Si elle accepte l'appel, celle-ci répond alors par de nouveaux messages de signalisation comportant l'adresse physique du terminal ou client. Ainsi, chacun des deux terminaux connaissant l'adresse physique de l'autre partie, ils peuvent établir une connexion IP (*Internet Protocol*) pour la transmission des données (voix, vidéo...).

Un problème se pose toutefois avec les équipements de traduction d'adresses, connus sous l'acronyme de NAT (« *Network Address Translation* ») ou NAPT (« *Network Adress Port Translation* ») et définis dans le RFC 1631, « *The IP Network Address Translator* », et dans le RFC 3022 « *Traditional IP Network Address Translator (Traditional NAT)* ». Ces équipements sont prévus pour interfacer un sous-réseau (typiquement, un réseau privé) avec le réseau public Internet. Les équipements (terminaux) du sous-réseau ont des adresses physiques IP dont la validité est limitée au sous-réseau. Lorsqu'ils souhaitent établir des communications avec des équipements situés hors du sous-réseau, l'équipement de traduction d'adresses leur affecte une adresse publique temporaire, valable pour le réseau public, et mémorise l'association entre l'adresse privée du client et son adresse publique temporaire.

L'équipement de traduction d'adresses NAT modifie donc à la volée les messages transmis entre le réseau privé et le réseau public, en
- transformant les adresses privées des terminaux en adresses publiques, dans les entêtes IP des messages sortants, c'est-à-dire allant du réseau privé vers le réseau public, et en
- transformant les adresses publiques des terminaux en adresses privées, dans les entêtes IP des messages entrant, c'est-à-dire allant du réseau public vers le réseau privé.

Un problème se pose donc pour la traversée des équipements de traduction d'adresses par les messages de signalisation SIP/SDP (ou H.323 ou autres). Ce problème est connu sous l'expression « *NAT traversal* » en langue anglaise (traversée de NAT).

Il est par exemple décrit sur l'encyclopédie participative « wikipedia » à l'adresse : « http://en.wikipedia.org/wiki/NAT_traversat.htmt » et évoqué dans le RFC 3235 de l'IETF, intitulé « *Network Address Translation (NAT)* - *Friendly Application Design Guidelines* ».

Les protocoles de signalisation, comme SIP et SDP, sont considérés comme des protocoles applicatifs. Le protocole SIP/SDP, par exemple, peut être transmis par le protocole TCP ou UDP, eux-même étant situés au-dessus de IP dans la pile protocolaire. Un message SIP est donc en fait une suite de paramètres encapsulée dans un message TCP ou UDP, lui-même encapsulé dans un message IP.

Les équipements de traduction d'adresses NAT ne modifient que les paramètres situés au niveau de la couche IP, laissant intacts les paramètres situés dans des couches plus hautes.

Autrement dit, les adresses physiques contenues dans les messages SIP et SDP ne sont pas modifiées par les équipements de traduction d'adresses, au contraire des adresses contenues dans les entêtes IP.

Il en résulte que le destinataire (le client appelé) du message de signalisation ne connaîtra que l'adresse privée du client appelant. Or, celle-ci n'ayant du sens que dans le réseau privé, il ne pourra pas y avoir d'établissement de session de communication.

Ce problème étant bien connu, de nombreuses solutions ont été proposées pour le résoudre. On peut distinguer deux approches principales pour résoudre ce problème : des approches basées sur le client appelant et des approches basées sur un serveur ou un équipement du réseau de communication.

Dans la première catégorie, on peut citer le mécanisme STUN (« *Simple Traversal of UDP through NATs* »), décrit dans le RFC 3489. Ce mécanisme permet à un client (ou terminal) de connaître son adresse publique. Ainsi, préalablement à l'émission d'un message vers le réseau public, le client appelant transmet une requête à un serveur STUN situé dans ce réseau public. Celui-ci lui répond par un message contenant l'adresse (et le port) sous laquelle il « voit » le client, c'est-à-dire son adresse publique.

Le client peut alors utiliser cette adresse publique pour indiquer, via le protocole SDP, à quelle adresse il souhaite que recevoir des réponses.

Cette solution souffre toutefois d'une limitation majeure, puisque de nombreux NAT sont dits « symétriques » et associent une adresse publique à un couple de parties. Aussi, l'adresse publique attribuée par le NAT au client peut être différente pour la communication avec le serveur STUN et pour la session à établir avec l'autre partie. Dans un pareil cas, la communication entre le client et l'autre partie ne peut pas être établie.

D'autres propositions, basées sur le même principe, ont été faites pour améliorer la situation, comme les mécanismes TURN (« *Traversal Using Relay NAT* »). Le mécanisme TURN est décrit dans le document « draft-rosenberg-midcom-turn-09.txt », publié en mars 2006 sur le site de l'IETF.

Toutefois ni le mécanisme STUN, ni le mécanisme TURN ne sont adaptés au protocole SIP.

Aussi, un nouveau mécanisme, ICE (« *Interactive Connectivity Establishment* ») a été proposé pour adapter la traversée des messages de signalisation SIP. Il se base sur les mécanismes STUN et TURN en les adaptant. Le mécanisme ICE est décrit dans le document « draft-ietf-mmusic-ice-09.txt », également publié sur le site de l'IETF en juin 2006 et intitulé « *Interactive Connectivity Establishment: A Methodology for Network Address Translater (NAT) Traversal for Multimedia Session Establishment Protocols* ».

La seconde catégorie de solutions repose sur un équipement au sein du réseau de communication. Il est à noter que les premières solutions mettaient en oeuvre un serveur au sein du réseau (serveur STUN, par exemple), mais l'initiative étant celle du client. Dans cette seconde famille de solutions, au contraire, l'initiative et la mise en oeuvre des solutions de traversée de NAT appartient à un équipement de réseau.

Une première solution appartenant à cette famille est par exemple d'associer une passerelle applicative à l'équipement de traduction d'adresses NAT. Ce mécanisme est connu sous le nom de ALG pour « *Application Layer Gateway* » ou « *Application-level Gateway* » en langue anglaise et est défini dans le paragraphe 2.9 du RFC 2663 intitulé « *IP Network Address Translator (NAT) Terminology and Considerations* » publié en août 1999.

Cette passerelle (ou un NAT ayant les fonctionnalités d'une telle passerelle) dispose des moyens de compréhension des protocoles applicatifs utilisés par les messages. Elle peut notamment comprendre le contenu des messages de signalisation et traduire les adresses physiques contenus dans les messages SDP afin que les parties échangent leurs adresses publiques et non leurs adresses privées et puissent ainsi établir des sessions de communication.

Une variante de cette solution consiste à utiliser à utiliser un contrôleur de session dit SBC (pour « *Session Border Controller* ») qui se situera sur les chemins des messages de signalisation. Ce type de produit permet de contrôler la transmission des sessions de communication et des messages de signalisation entre les deux réseaux. Plus précisément, le SBC peut jouer le rôle d'un élément de signalisation « proxy » SIP qui peut contrôler des moyens de transmission de média (un « media proxy ») par un protocole tel Megaco afin que les sessions de communication s'établissent convenablement entre les parties.

D'autres solutions encore existent dans l'une et l'autre de ces deux grandes catégories, sans qu'aucun ne s'impose définitivement par rapport aux autres.

Du coup, un même réseau de communication peut mettre en oeuvre simultanément plusieurs solutions. Un client de communication ne sait a priori pas si le réseau auquel il est associé met en oeuvre une solution de traversée : il peut alors mettre en oeuvre une solution de type ICE alors que le réseau met en oeuvre une solution de type ALG ou SBC.

Le fait de déployer deux solutions est redondant et engendre de la perte de ressources, mais en outre les solutions peuvent se perturber mutuellement et engendrer un mauvais fonctionnement du réseau de communication : les adresses contenues dans les messages de signalisation SIP/SDP peuvent être modifiées d'une mauvaise façon, ou, alors qu'il ne fallait pas, par l'équipement ALG ou SBC. Finalement, les sessions de communication ne peuvent pas être établies.

Ce problème ne semble pas avoir été soulevé jusqu'à aujourd'hui.

Une solution que l'on peut proposer serait de désactiver manuellement les mécanismes mis en oeuvre par un client SIP (ICE, STUN, TURN...) lorsque celui-ci sait être « attaché à un SBC ou à une passerelle ALG.

Une telle façon de faire est cependant complexe à mettre en oeuvre : pour qu'un client sache qu'il est attaché à une passerelle ALG ou à un SBC, il doit connaître la topologie du réseau de son fournisseur d'accès. De plus, la configuration doit être manuellement modifiée chaque fois que le client est attaché à un nouveau réseau.

Par ailleurs, cette approche n'est pas optimale puisque dès qu'une solution basée sur une passerelle ALG ou un SBC est déployée, elle est, par construction, préférée à la solution basée sur le client. Or, c'est cette dernière solution qui est généralement optimale puisqu'elle permet au client de maîtriser l'établissement de la session de communication et ne met pas en oeuvre un relais média comme les solutions SBC ou ALG.

Le but de l'invention est de pallier ces inconvénients en proposant une façon de faire cohabiter de façon optimale les solutions basées sur les clients et les solutions basées sur le réseau de communication (ALG, SBC...)

Pour ce faire, l'invention a pour premier objet un procédé d'établissement d'une session de communication entre un client de communication appelant et un client de communication appelé, au travers d'un réseau de communication comportant au moins un équipement de traduction d'adresses (NAT, NAPT, SBC...).

De façon connue en soi, le procédé comporte des étapes de transmissions de messages de signalisation qui transitent par ce ou ces équipements de traduction d'adresses et permettent l'échange des adresses physiques des clients de communication pour l'établissement de la session de communication.

Le procédé selon l'invention est novateur et se caractérise en ce qu'au moins un client transmet au moins un message de signalisation contenant
- une adresse physique dans un premier emplacement et,
- dans un second emplacement distinct, une information codée contenant cette même adresse physique.

Dans la mesure où elles sont codées, les informations contenant l'adresse physique ne peuvent pas être modifiées par le dispositif de traduction d'adresses (NAT, NAPT, SBC...). Le client de communication destinataire du message de signalisation dispose alors de l'adresse physique non modifiée du client émetteur. Il peut préférentiellement utiliser cette adresse en étant assurée qu'elle n'a pas été modifiée.

En outre, le fait que l'adresse encodée est ajoutée de façon redondante, sans suppression de l'adresse non encodée permet de rester compatible avec les spécifications actuelles de l'IETF et des différents équipements de traduction d'adresses.

Cette adresse physique peut être obtenue par une solution de traversée d'équipement de traduction d'adresses, mise en oeuvre par le client de communication, ainsi qu'explicité précédemment. Cette solution peut par exemple être le mécanisme STUN.

L'invention vient donc résoudre un problème technique auquel seront confrontés les architectures déployant des mécanismes de traversée d'équipement de traduction d'adresses, comme ICE ou STUN.

Selon une variante de l'invention, le (ou les) message de signalisation contient également
- des numéros de ports dans des premiers emplacements de port, et,
- dans des seconds emplacements de ports distincts, une ou plusieurs informations codées contenant le ou lesdits numéros de ports.

Selon des mises en oeuvre de l'invention, les différents emplacements sont des champs du protocole SDP défini par le RFC 2327 de l'IETF. Les seconds emplacements (pour les adresses et éventuellement pour les numéros de ports) sont des champs d'attribut de ce protocole SDP, c'est-à-dire des champs « a » tels que définis dans le paragraphe 6 du RFC 2327.

L'invention a également pour objet un client de communication disposant de moyens d'émission de messages de signalisation pour l'établissement d'une session de communication avec au moins un autre client de communication, et de moyens de traversée d'équipement de traduction d'adresses.

Ce client est caractérisé en ce qu'il dispose de moyens pour, préalablement à l'émission d'un message de signalisation, ajouter au sein de celui-ci, une information codée contenant l'adresse physique obtenue par ces moyens de traversée d'équipement de traduction d'adresses.

Ces moyens peuvent également être aptes à ajouter une information codée contenant un numéro de port.

Ces informations codées peuvent être ajoutées dans des champs d'une partie conforme au protocole SDP du message de signalisation conforme au protocole SIP, notamment dans le champ d'attribut « a ».

L'invention a également pour objet un réseau de communication mettant en oeuvre des clients de communication tels que décrits, et un produit logiciel mettant en oeuvre le procédé précédemment décrit.

L'invention apparaîtra de façon plus claire dans la description de mise en oeuvre qui va suivre en liaison avec les figures annexées.

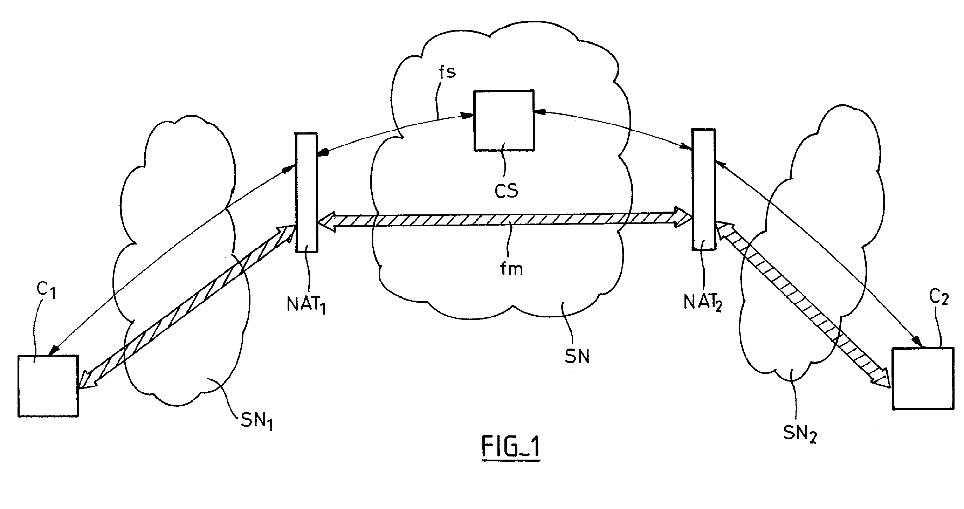

La figure 1 représente un réseau de communication dans lequel l'invention peut être mise en oeuvre.

Dans cet exemple de la figure 1, le réseau de communication est formé de 3 réseaux SN₁, SN₂ et SN, reliés par deux équipements de traduction d'adresses NAT₁ et NAT₂. Il s'agit là d'un cas classique où chaque client de communication C₁ et C₂ est connecté à un sous-réseau privé, respectivement SN₁ et SN₂. Chacun de ces sous-réseaux privés est connecté à un réseau public SN par l'intermédiaire d'un équipement de traduction d'adresses, NAT₁ et NAT₂ respectivement.

D'autres cas sont toutefois possibles. Par exemple, un seul équipement de traduction d'adresses NAT peut être déployé entre deux sous-réseaux privés appartenant à deux parties d'une entreprise. On peut imaginer aussi la situation où l'un des deux clients est connecté à un sous-réseau privé sans usage d'un NAT. Auquel cas, un seul équipement de traduction d'adresses NAT est déployé, entre l'autre sous-réseau privé et le sous-réseau public.

Le réseau de communication (principalement le réseau public SN) comporte au moins un équipement. Ces équipements peuvent être des noeuds de transmission IP, comme des routeurs, mais également des serveurs, des éléments de signalisation, proxy SIP, de serveurs d'appel... Sur la figure 1, par soucis de clarté, seuls les équipements de traduction d'adresses NAT₁ et NAT₂, ainsi qu'un serveur d'appel CS ont été représentés.

Ce serveur d'appel CS est considéré par la suite dans son acception la plus générale et recouvre donc les éléments de signalisation « proxy SIP », les « softswitches », les contrôleurs d'appel (« call controller »), les CSCF (« *Call Session Control Function* ») dans une architecture IMS (« *IP Multimedia Subsystem* »), etc.

L'établissement d'une session de communication fait partie de l'état de la technique bien connue de l'homme de métier. Schématiquement, elle consiste en des étapes de transmission de message de signalisation entre les deux clients de communication C₁ et C₂- Ce flux de signalisation fs est transmis par le serveur d'appel CS situé dans le réseau public SN. Comme évoqué précédemment, ces transmissions de messages de signalisation permettent l'échange des adresses physiques des clients de communication C₁ et C₂, et permettent ainsi l'établissement de la session de communication fm entre les deux clients de communication : le flux média (voix, données, vidéo...) fm peut alors être transmis entre les deux clients en utilisant ces adresses physiques échangées.

Les messages de signalisation transitent par les équipements de traduction d'adresses NAT₁ et NAT₂. Aussi, chacun des deux clients de communication C₁ et C₂ possèdent (pendant une session) une adresse physique publique, attribuée par l'équipements de traduction d'adresses auquel il est attaché et différente de son adresse physique privée.

Afin de pouvoir établir la session de communication fm, les deux clients doivent échanger leurs adresses physiques publiques (et non leurs adresses physiques privées).

On suppose dans l'exemple de la figure 1 que le client de communication appelant C₁ met en oeuvre une solution de traversée d'équipement de traduction d'adresse (« *NAT Traversal* »). Il est entendu par l'expression « mettre en oeuvre » que non seulement le client possède des moyens de traversée d'équipement de traduction d'adresses, mais en outre que ceux-ci sont activés. On peut en effet imaginer la situation où ces moyens sont désactivés pour différentes raisons (panne, dé-configuration manuelle car l'utilisateur les juge pas assez performants etc.)

Ces moyens de traversée peuvent être conformes aux différentes solutions disponibles dans l'état de la technique existant et à venir, qui sont basées sur les clients de communication. On peut ainsi citer les mécanismes STUN, TURN ou ICE, cités précédemment.

Préalablement à l'émission d'un message de signalisation, le client de communication appelant C₁ ajoute dans ce message :
- son adresse physique et notamment son adresse physique publique qu'il peut avoir obtenu par une solution de traversée d'équipements de traduction d'adresses, et
- une information codée contenant cette adresse physique.

Une caractéristique de l'invention réside donc dans l'ajout une information codée et redondante correspondant à l'adresse physique dans un message de signalisation destiné à la partie destinataire.

Dans le cadre d'une mise en oeuvre utilisant le protocole SIP, ce message de signalisation est typiquement un message « INVITE ». Ce message de signalisation « INVITE » comporte une partie conforme au protocole SDP qui permet la description de la session de communication à mettre en oeuvre. Le protocole SDP est décrit dans le RFC 2327 de l'IETF intitulé « SDP: Session Description Protocol ».

Le client de communication C₁ ajoute dans cette partie SDP (ou dans une des parties SDP, dans le cas d'un message de signalisation contenant plusieurs parties SDP) son adresse physique publique et éventuellement des numéros de ports, dans des emplacements prévus par le protocole pour cet usage.

Le protocole SDP prévoit en effet un certain nombre de champs, chacun pouvant contenir des sous-champs. On peut partager ces champs en deux catégories :

Les champs visant à la description de la session à mettre en place, qui sont :
- v: Version du protocole
- o: Propriétaire/créateur et identification de la session
- s: nom de la session
- i: informations sur la session
- u: URI de la description
- e: adresse électronique (e-mail)
- p: numéro de téléphone
- c: information de connexion
- b: information de bande-passante
- t: durée de validité de la session
- r: intervalle de répétition
- z: ajustement de fuseaux horaires
- k: clé de cryptage
- α: attributs

Une seconde catégorie de champs sont ceux relatifs à la description du ou des médias et qui sont :
- m: nom du média et adresse de transport
- i: titre du média
- c: information de connexion
- b: information de bande passante
- k: clé de cryptage
- α: attributs

Selon la spécification du protocole SDP, ces champs sont ordonnées, afin de permettre une lecture plus rapide et efficace par les interfaces protocolaires des clients de communication.

Certains champs contiennent des emplacements dans lequel le client de communication peut ou doit ajouter une adresse physique. D'autres emplacements sont prévus pour contenir un numéro de ports.

Ainsi, le champ « o » contient les sous champs suivants : <user name> <session_id> <version> <network type> <address type> <address>, ainsi que spécifié par le RFC 2327.

Le sous-champ <address> contient l'adresse physique du client de communication C₁. S'il dispose de plusieurs adresses physiques, il s'agit de celle à laquelle il souhaite que soit établie la session de communication. Il s'agit préférentiellement de son adresse physique publique, c'est-à-dire connue et utilisable au sein du réseau de communication SN.

Le champ « m » peut contenir les sous-champs <media> <port> <transport> <fmt list>. Le second sous-champ peut donc contenir un numéro de port.

Le champ « c » peut contenir les sous champs <network type> <address type> <connection address>

Le champ d'attributs « α » est un champ ouvert contenant deux sous-champs <attribute> (attribut) et <value> (valeur). Il peut également contenir des adresses physiques.

Selon l'invention, le client de communication ajoute une information codée contenant l'adresse physique dans un second emplacement distinct du premier. Autrement dit, une adresse physique peut être contenu à la fois dans un premier emplacement (sous une forme non codée) et dans un second emplacement (sous une forme codée).

Ce second emplacement peut être un champ d'attributs « α ». Il peut contenir un nom d'attribut, choisi de façon arbitraire mais connu de l'ensemble des clients de communication susceptibles d'être parties à une session de communication. Dans l'exemple qui suit, ce nom d'attribut est « rdd ».

Compte tenu du problème posé par l'ordre imposé des champs du protocole SDP, le second emplacement peut être ajouté dans la prochaine position possible. Si l'adresse physique ou le numéro de port est contenu dans un premier emplacement qui est un champ « o », « c » ou « m », le second emplacement est le premier champ « α » qui suit. Si le premier emplacement est un champ « α » alors le second emplacement est le champ « α » suivant immédiatement.

Ces règles permettent de faciliter la conception de l'interface protocolaire du client de communication C₂ destinataire du message de signalisation.

Cet ajout redondant de l'adresse physique et du numéro de port peut être effectué pour l'ensemble des adresses physiques et numéros de ports contenus dans le message de signalisation, ou bien pour une partie seulement d'entre eux.

Selon un mode de réalisation de l'invention, les adresses et numéros de ports sont codés isolement. Lorsqu'un champ (c'est-à-dire une « ligne ») contient une adresse physique, seule l'adresse physique est codée et ajoutée dans le second emplacement correspondant à ce champ.

Selon un autre mode de réalisation, l'ensemble du champ est codé et ajouté dans le second emplacement. De cette façon, si un même champ comporte à la fois un numéro de port et une adresse physique, un seul codage est nécessaire, et l'ensemble des informations peut être aisément ajouté dans un seul second emplacement (c'est-à-dire un seul champ « a »).

Autrement dit, l'information codée peut ne contenir qu'une adresse physique (codée) ou un numéro de port (codé) ou bien contenir également d'autres informations (et notamment contenir à la fois un numéro de port et une adresse physique).

Un exemple d'une partie SDP d'un message de signalisation SIP selon ce second mode de réalisation de l'invention est donné ci-dessous :
v=0
o=mhandley 2890844526 2890842807 IN IP4 126.16.64.4
i=A Seminar on the session description protocol
c=lN lP4 224.2.17.12/127
a=rdd:bz1taGFuZGxleSAyODkwODQ0NT121DI4OTA4NDI4MDcgSU
4gSVA0lDEyNi4xNi42NC40
a=rdd:Yz1JTiBJUDQgMjl0LjluMTcuMTIvMTI3
m=audio 49170 RTP/AVP 0
a=rdd:bT1hdWRpbyA0OTE3MCBSVFAvQVZQlDA=
a=rtcp:53020
a=rdd:YTlydGNwOjUzMDlw
a=rtpmap:96 L8/8000
a=rtpmap:97 L16/8000
m=application 32416 udp wb
a=rdd:bT1hcHBsaWNhdGlvbiAzMjQxNiB1ZHAgd21=

Selon les règles données précédemment, le premier champ « a » est le second emplacement pour l'adresse contenue dans le champ « o ». Le second champ « a » est le second emplacement pour l'adresse physique contenu dans le champ « c ». Le troisième champ « a » est le second emplacement pour le numéro de port contenu dans le premier champ « m » (49170). Le cinquième champ « a » est le second emplacement pour le numéro de port (53020) contenu dans le quatrième champ « a ». Enfin, le dernier champ « a » est le second emplacement pour le numéro de port (32416) contenu dans le champ « m » qui précède immédiatement.

Toutefois, dans l'ensemble de ces champs, c'est l'intégralité de la ligne contenant l'adresse physique ou le numéro de port qui est codée. Autrement dit, c'est le champ contenant une adresse physique et/ou un numéro de port qui est codé et non pas l'adresse physique ou le numéro de port pris individuellement.

Ainsi, l'information codée
« rdd:bzltaGFuZGxleSAyODkwODQ0NTl2lD14OTA4NDl4MDcgSU4g SVAOlDEyNi4xNi42NC40 »
contient l'adresse physique « 126.16.64.4 » mais également les autres données présentes dans le champ « o=mhandley 2890844526 2890842807 IN IP4 126.16.64.4 ».

Dans cet exemple, les adresses physiques et numéros de ports sont encodés selon une base 64. Ce type de codage est par exemple décrit par le RFC 3548 de l'IETF (*Internet Engineering Task Force*), mais différentes variantes existent.

Tous types de codage sont toutefois possibles. Il est nécessaire toutefois que les différentes parties partagent la connaissance de type (et éventuellement de la clé) de codage employé et que les dispositifs du réseau (NAPT, NAT, SBC...) ne puissent pas reconnaître qu'il s'agit de numéros de port et/ou d'adresses physiques.

Dans certains cas, il peut être utile de mettre en oeuvre des techniques de cryptographie plus évolué.

Il peut également être prévu de véhiculer au sein du message de signalisation des informations relatives au type de codage, et éventuellement des clés ou autres informations de même nature permettant le décodage par le client de communication C₂ destinataire.

Dans le mode de réalisation selon lequel uniquement les adresses physiques et les numéros de ports sont codés, ceux-ci peuvent être simplement modifiés pour tromper les dispositifs du réseau de communication.

Pour une adresse physique IP, il peut simplement s'agir de transformer les points en barres obliques. Ainsi l'adresse « 126.16.64.4 » deviendrait « 126/16/64/4 ». Une autre possibilité serait de transformer chaque chiffre de l'adresse physique par une lettre de rang correspondant. L'adresse de l'exemple deviendrait alors « abf.af.fd.d ».

Le message de signalisation, une fois émis, est transmis à l'équipement de traduction d'adresses NAT₁, puis à d'autres équipements du réseau public SN. Éventuellement, avant de parvenir à l'équipement de traduction d'adresses NAT₁, il peut également avoir transité par des équipements du sous-réseau privé SN₁.

Certains de ces équipements peuvent posséder des moyens de traversée d'équipements de traduction d'adresses. Ces moyens peuvent être conformes aux solutions exposées précédemment : il peut s'agir de ceux d'une passerelle ALG (*Application Layer Gateway*) ou d'un serveur SBC (*Session Border Controller).*

Ces équipements peuvent alors modifier les adresses physiques et les numéros de ports contenus dans la partie SDP des messages de signalisation SIP. Ainsi, les adresses contenues dans les champs « m », « c », « o » peuvent être modifiés avant de parvenir au client de communication C₂. Certains champs « α » peuvent également être modifiés lorsqu'ils contiennent des numéros de port ou des adresses physiques non-codés, comme c'est le cas pour le quatrième champ « α » de l'exemple.

Toutefois, parce qu'ils sont codés, les numéros de port et adresses physiques contenus dans les champs « a » ne peuvent pas être modifiés par ces dispositifs. Ils parviennent au client de communication C₂ sans modification, et celui-ci peut les utiliser, de préférence aux adresses physiques et numéros de ports contenus dans les autres champs qui sont susceptibles d'avoir été modifiés.

De la même façon, les autres messages de signalisation peuvent également comporter des adresses physiques et des numéros de ports codés, qu'il s'agisse des messages émis par le client de communication C₁ ou de ceux émis par le client de communication C₂. L'ensemble du flux de signalisation fs peut ainsi être conforme à ce qui vient d'être décrit.

En disposant ainsi d'adresses physiques et de numéros de ports en ayant l'assurant qu'ils n'aient pas été modifiés, les deux clients de communication peuvent établir la session de communication et un (ou plusieurs) flux média fm.

## Revendications

1. Procédé d'établissement d'une session de communication (fm) entre un client de communication appelant (C₁) et un client de communication appelé (C₂), au travers d'un réseau de communication (SN₁, SN, SN₂) comportant au moins un équipement de traduction d'adresses (NAT₁, NAT₂), ledit procédé comportant des étapes de transmissions de messages de signalisation (fs), transitant par ledit au moins un équipement de traduction d'adresses et permettant l'échange des adresses physiques desdits clients de communication pour l'établissement de ladite session de communication, et **caractérisé en ce qu'**au moins un client transmet au moins un message de signalisation contenant une adresse physique dans un premier emplacement, ladite adresse physique ayant été préalablement obtenue par des moyens de traversée d'équipement de traduction d'adresses, et, dans un second emplacement distinct, une information codée contenant ladite adresse physique.

2. Procédé selon la revendication précédente dans lequel ladite adresse physique est obtenue par une solution de traversée d'équipement de traduction d'adresses, mise en oeuvre par ledit au moins client de communication.

3. Procédé selon l'une des revendications précédentes dans lequel ledit au moins un message de signalisation contient en outre un ou plusieurs numéros de port dans des premiers emplacements de port, et dans des seconds emplacements de ports distincts, une ou plusieurs informations codées contenant le ou lesdits numéros de ports.

4. Procédé selon l'une des revendications précédentes dans lequel lesdits emplacements sont des champs d'une partie conforme au protocole SDP dudit message de signalisation, celui-ci étant conforme au protocole SIP

5. Procédé selon la revendication précédente, dans lequel lesdits seconds emplacements sont des champs d'attribut dudit protocole SDP.

6. Client de communication (C₁) disposant de moyens d'émission de messages de signalisation (fs) pour l'établissement d'une session de communication (fm) avec au moins un autre client de communication (C₂), et de moyens de traversée d'équipement de traduction d'adresses, **caractérisé en ce qu'**il dispose de moyens pour, préalablement à l'émission d'un message de signalisation, ajouter au sein de celui-ci, une information codée contenant l'adresse physique préalablement obtenue par lesdits moyens de traversée d'équipement de traduction d'adresses.

7. Client de communication selon la revendication précédente, dans lequel lesdits moyens sont en outre aptes à ajouter une information codée contenant un numéro de port.

8. Client de communication selon la revendication 6, dans lequel lesdites informations codées sont ajoutées dans des champs d'une partie conforme au protocole SDP du message de signalisation conforme au protocole SIP.

9. Réseau de communication mettant en oeuvre des clients de communication selon les revendications 6 à 8.

10. Produit logiciel prévu pour mettre en oeuvre le procédé selon l'une des revendications 1 à 5.

## Revendications modifiées

### Revendications modifiées conformément à la règle 137(2) CBE.

**1.** Procédé d'établissement d'une session de communication (fm) entre un client de communication appelant (C₁) et un client de communication appelé (C₂), au travers d'un réseau de communication (SN₁, SN, SN₂) comportant au moins un équipement de traduction d'adresses (NAT₁, NAT₁), ledit procédé comportant des étapes de transmissions de messages de signalisation (fs), transitant par ledit au mains un équipement de traduction d'adresses et permettant l'échange des adresses physiques desdits clients de communication pour l'établissement de ladite session de communication, et **caractérisé en ce qu'**au moins un client de communication transmet au moins un message de signalisation contenant une adresse physique dans un premier emplacement, ladite adresse physique ayant été préalablement obtenue par des moyens de traversée d'équipement de traduction d'adresses, et **en ce que** ledit client de communication ajoute dans un second emplacement distinct, une information codée et redondante correspondant à ladite adresse physique.

**2.** Procédé selon la revendication précédente dans lequel ladite adresse physique est obtenue par une solution de traversée d'équipement de traduction d'adresses, mise en oeuvre par ledit au moins client de communication.

**3.** Procédé selon l'une des revendications précédentes dans lequel ledit au moins un message de signalisation contient en outre un ou plusieurs numéros de poil dons des premiers emplacements de port, et dans des seconds emplacements de ports distincts, une ou plusieurs informations codées contenant le ou lesdits numéros de ports.

**4.** Procédé selon l'une des revendications précédentes dans lequel lesdits emplacements sont des champs d'une partie conforme au protocole SDP dudit message de signalisation, celui-ci étant conforme au protocole SIP

**5.** Procédé selon la revendication précédente, dons lequel lesdits seconds emplacements sont des champs d'attribut dudit protocole SDP.

**6.** Client de communication (C₁) disposant de moyens d'émission de messages de signalisation (fs) pour l'établissement d'une session de communication (fm) avec au mains un autre client de communication (C₂), et de moyens de traversée d'équipement de traduction d'adresses, **caractérisé en ce qu'**il dispose de moyens pour, préalablement à l'émission d'un message de Signalisation, ajouter au sein de celui-ci, une information codée et redondante correspondant à l'adresse physique préalablement obtenue par lesdits moyens de traversée d'équipement de traduction d'adresses.

**7.** Client de communication selon la revendication précédente, dans lequel lesdits moyens sont en outre aptes à ajouter une information codée contenant un numéro de port.

**8.** Client de communication selon la revendication selon la revendication 6, dans lequel lesdites informations codées sont ajoutées dans des champs d'une partie conforme au protocole SDP du message de signalisation conforme au protocole SIP.

**9.** Réseau de communication comprenant des clients de communication selon les revendications 6 à 8.

**10.** Produit logiciel prévu pour mettre en oeuvre le procédé selon l'une revendications 1 à 5.
